# EUROPEAN PATENT SPECIFICATION

(11) **EP 1 169 596 B1**
(45) Date of publication and mention of the grant of the patent: **10.12.2003**
(21) Application number: 00923052.5
(22) Date of filing: 12.04.2000
(51) Int. Cl.: F16L 21/06

(54) **TUBE CLAMP INSERT**
MUFFE FÜR EINE ROHRKLEMME
INSERT DE PINCE POUR TUYAUX

(30) Priority: 12.04.1999 SE 9901283
(43) Date of publication of application: 09.01.2002
(73) Proprietor: Suncoast Investment AB, 572 29 Oskarshamn (SE)
(72) Inventor: FALKVIST, Roger, S-461 39 Trollhättan (SE)
(74) Representative: Egeröd, Lisbeth
(86) International application number: SE0000705
(87) International publication number: WO00061982

(56) References cited:
- GB-A- 2 310 903
- US-A- 1 976 797
- US-A- 4 653 782
- US-A- 4 893 843
- US-A- 5 058 931

## Description

### Technical field

The present invention relates to a tube clamp insert primarily to protect against the arise of corrosion between different metals.

The object of the present invention is to obtain an insert between tube and tube clamp at the mounting of tubes in order to eliminate corrosion between different metals present in tubes, and tube clamps respectively.

Further objects of the invention will become apparent from the following description.

### Background of the invention

At the mounting of tubes, such as mounting of long tube lengths within the process industry the tubes have to be mounted against a wall or the similar at regular intervals by using a tube clamp at every two metres to receive the load of the tube and its contents, which can be relatively heavy liquids. The tubes as such are generally also very heavy due to the alloys chosen from a corrosion point of view or due to the pressure which can be present in the single case.

Document GB-A-2 310 903 discloses a pipe jointing collar comprising a sealing member formed by sealing strips.

The mounting thereby takes place by mounting tube clamping units onto a wall, on the floor or in the ceiling, directly or via a pendula. The tube to be attached to the clamps are provided with an isolating tape, the tube is inserted into the clamps and the clamps are locked using their releasable clamp halves. The use of isolating tape is necessary to prevent corrosion between the metal surfaces on tube and tube clamp, respectively. It is utmost rare that the same metal alloy is used in clamp and tube.

The hitherto used method for mounting of tubes, which, in Sweden only, utilizes about 2 million tube clamps per year, also means that a great number of clamp dimensions have to be available as the tube diameters varies.

Further, the use of isolating tape has substantial drawbacks as well, as the tape may not be correctly applied but a renewed isolation has to take place to cover the surface of the clamp, as well as damages quite often occur on the tape during the work which means corrosion. Further, the use of isolating tape means that the tube is not allowed to move lengthwise as the tape then will become damaged. Such movements are quite common at tubes within the process industry due to the different temperatures which are present in the tubes but also in their environments.

The problem has thus been to be able to obtain a correct and corrosion safe isolation between tube clamp and tube.

### Description of the present invention

It has now surprisingly turned out possible to be able to solve this problem by means of the present invention according to claim 1, which comprises a semi circular arch formed element which on the outside of the circular arch comprises at least one projecting member arranged to grip around a tube clamp, whereby the projecting member comprises a shoulder element.

By means of the present invention there is obtained a safe and corrosion freed insert at the mounting of a tube in a tube clamp, as well as the number of tube clamps kept in storage can be substantially reduced. Furthermore, the handling of tube clamps is rationalized as the insert can be pre-mounted at a storage site.

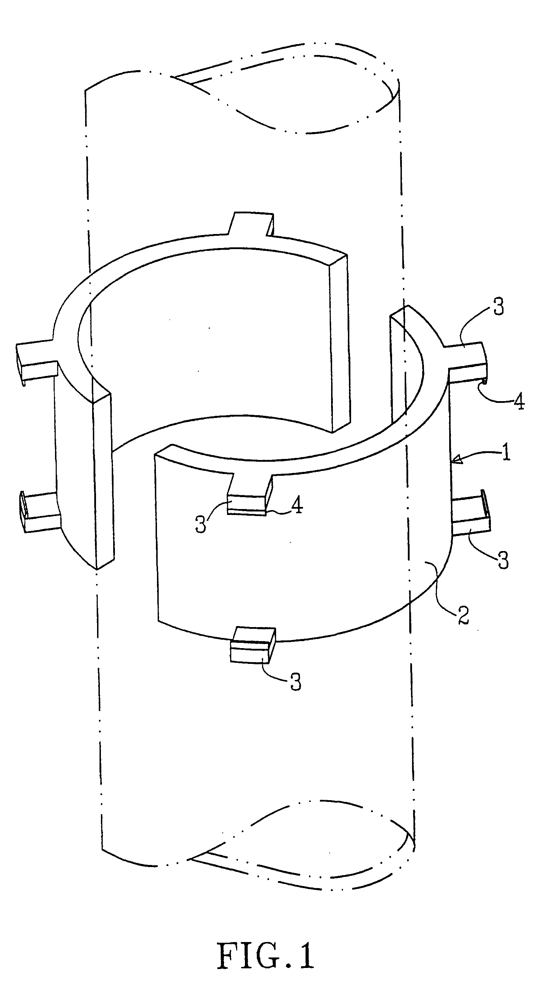

The present invention will be described more in detail in the following with reference to the accompanying drawing showing a preferred embodiment of the invention. In the drawing
FIG. 1 shows a perspective view of a preferred embodiment of the invention;

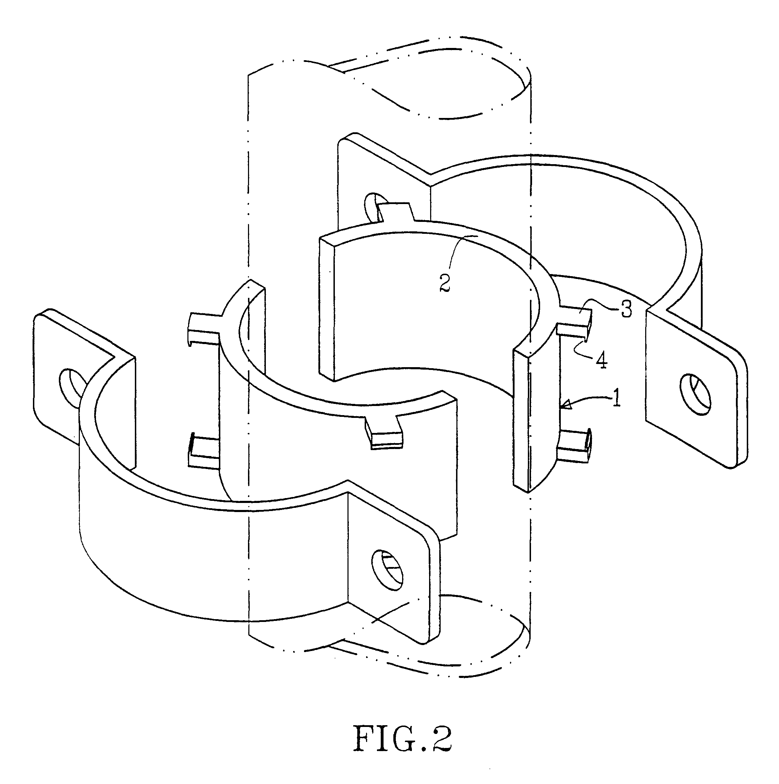

FIG. 2 shows a perspective view of a yet not combined unit with tube with tube clamp;
FIG. 3 shows the perspective view according to Fig. 2 in a composed condition with tube clamp;
FIG. 4 shows a perspective view of a second embodiment of the invention;
FIG. 5 shows a perspective view of a further, preferred embodiment of the invention; and
FIG. 6 shows a perspective view of still a further, preferred embodiment of the invention.

Number 1 denotes an insert according to the present invention, which insert 1 comprises a semi-circularly shaped element 2 adapted to a tube clamp with regard to its outer diameter. On the outer side of the insert element 2 in connection to the respective comers, four projections 3 are arranged, which projections 3 have shoulders 4. The projections 3 are arranged to grip over the outer side of a tube clamp and its shoulders 4 are arranged to snap over the edge of the tube clamp in order to hold the insert 1 to the clamp.

The projections 3 can be reduced to two whereby they are then suitably placed at the middle of the semi-circular arch.

The element is preferably manufactured in a rigid plastic material whereby its thickness can be varied so that different tube diameters can be received in the same tube clamp dimension by exchanging the insert 1.

The element can also be manufactured in a flexible material whereby the radius of the circular arch can be adjusted at the application of a tube clamp.

Another way of obtaining an adaptation of the radius/form is to provide a slot in the element across its longitudinal direction, preferably on both sides to thereby obtain a flexibility. (FIG. 6).

The width of the element should be larger than the width of the tubeclamp in order to substantially prevent corroding creeping voltages.

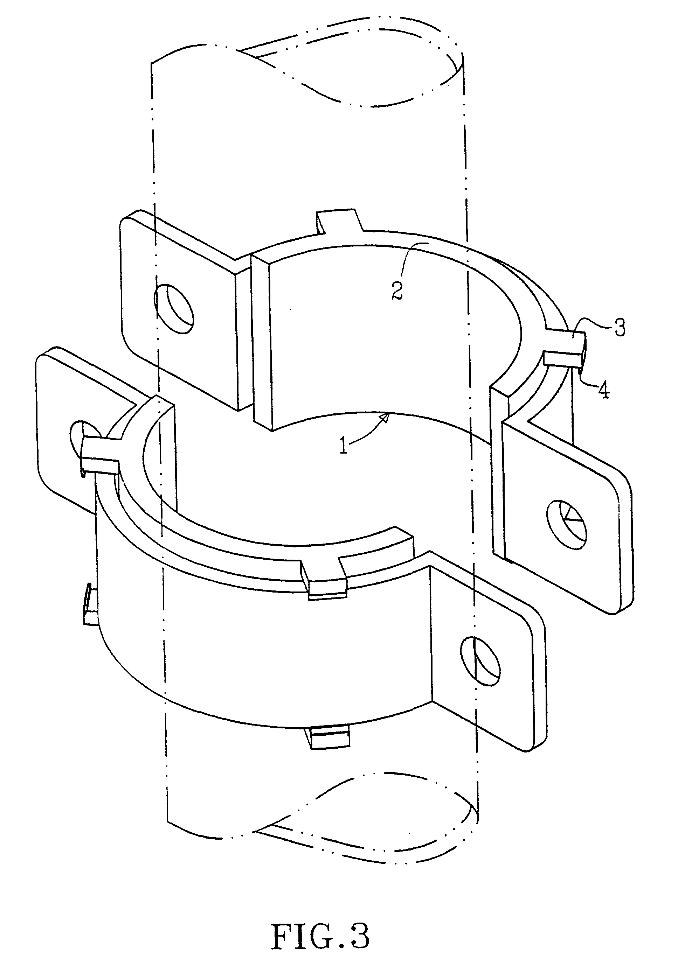

In Fig. 3 there is shown an embodiment having a projection 3 which consists of a cylindrical unit having a conical point, centrally placed on the arch formed outer side of the insert 1, whereby the projection 3 has a shoulder 4 intended to grip over the edge of a circular hole in a tube clamp.

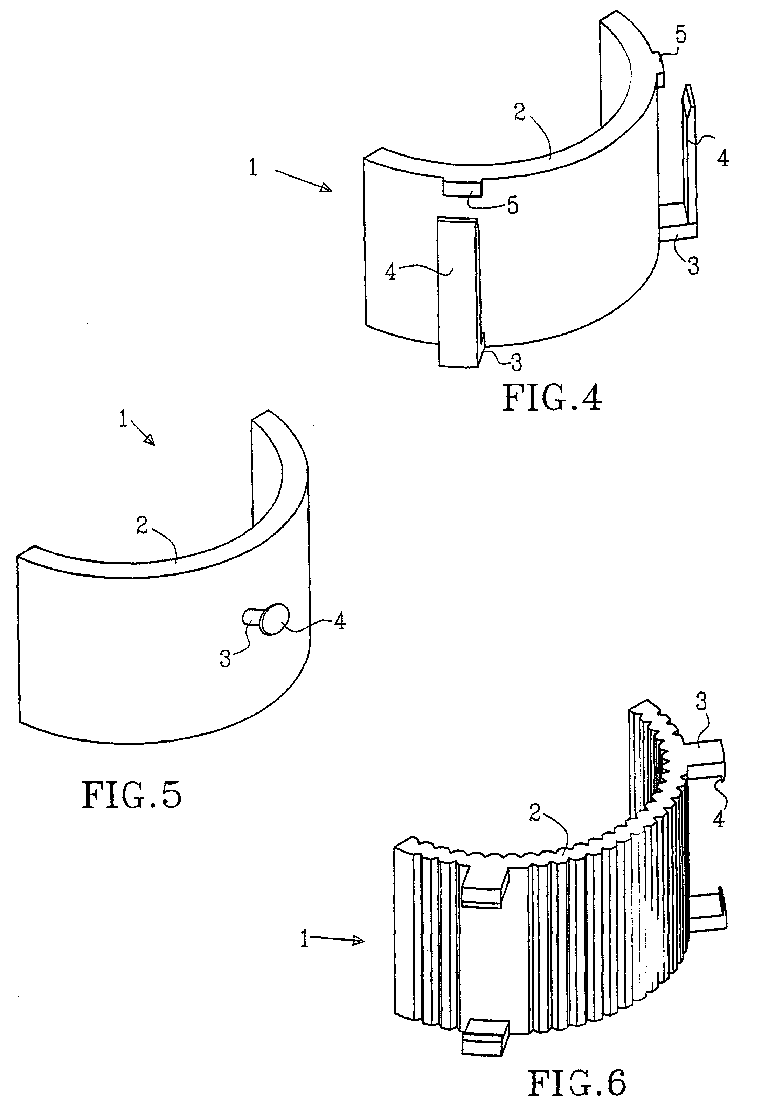

In Fig. 4 there is an embodiment shown where the projections 3, two pieces, have been designed as tongues which grip over the side edge and rear side of the tube clamp. In this case the shoulder 4 thus consists of a finger arranged on the respective projection 3. On the side of the insert facing away from the projections a retaining edge 5 can be arranged to grip over the contrary side edge of the tube clamp.

## Claims

1. Insert at tube clamps for obtaining a corrosion isolation comprising
a semi-circular arch formed element (2) which on the outer side of the circular arch comprises at least one projecting member (3) arranged to grip around a tube clamp, whereby the projecting member (3) comprises a shoulder element (4).

2. Insert according to claim 1,
**characterized in that** the number of projections (3) is two.

3. Insert according to claim 1,
**characterized in that** the number of projections (3) is four.

4. Insert according to claim 1,
**characterized in that** there is a projection (3) centrally arranged on the outer side of the circular arch element (2), whereby the projection (3) is arranged to grip into a hole arranged in the tube clamp.

5. Insert according to claim 1,
**characterized in that** there are projections (3), preferably two, on one of the side edges of the element (2), and that there is a finger (5) extending from such a projection (3), which finger (5) is arranged to grip over a side edge of a tube clamp and its rear side.

6. Insert according to claims 1-5,
**characterized in that** the element (2) is manufactured in a rigid plastic material.

7. Insert according to claims 1-5,
**characterized in that** the element (2) is manufactured in a flexible plastic material.

8. Insert according to claim 7,
**characterized in that** the flexible element (2) has been slotted to improve form adaptation.

## Patentansprüche

1. Muffe für Rohklemmen zur Korrosionsisolierung, umfassend
ein halbrundes, bogenförmiges Element (2), das an der Außenseite des runden Bogens wenigstens einen Vorsprung (3) umfasst, der so ausgeführt ist, dass er um eine Rohrklemme greifen kann, wobei der Vorsprung (3) ein Schulterelement (4) umfasst.

2. Muffe nach Anspruch 1,
**dadurch gekennzeichnet, dass** die Anzahl der Vorsprünge (3) zwei beträgt.

3. Muffe nach Anspruch 1,
**dadurch gekennzeichnet, dass** die Anzahl der Vorsprünge (3) vier beträgt.

4. Muffe nach Anspruch 1,
**dadurch gekennzeichnet, dass** ein Vorsprunge (3) vorgesehen ist, der zentral auf der Außenseite des runden Bogenelements (2) angeordnet ist, wobei der Vorsprung (3) so ausgeführt ist, dass er in eine Öffnung in der Rohrklemme greifen kann.

5. Muffe nach Anspruch 1,
**dadurch gekennzeichnet, dass** Vorsprünge (3), vorzugsweise zwei, an einem der Seitenränder des Elements (2) vorgesehen sind und dass ein Finger (5) vorgesehen ist, der sich von solch einem Vorsprung (3) erstreckt, wobei der Finger (5) so ausgeführt ist, dass er über einen Seitenrand einer Rohrklemme und ihre Rückseite greifen kann.

6. Muffe nach einem der Ansprüche 1 bis 5,
**dadurch gekennzeichnet, dass** das Element (2) aus einem starren Kunststoff gefertigt ist.

7. Muffe nach einem der Ansprüche 1 bis 5,
**dadurch gekennzeichnet, dass** das Element (2) aus einem flexiblen Kunststoff gefertigt ist.

8. Muffe nach Anspruch 7,
**dadurch gekennzeichnet, dass** das flexible Element (2) eingekerbt ist, um eine Formanpassung zu verbessern.

## Revendications

1. Pièce rapportée de colliers de tube pour obtenir une isolation contre la corrosion, comportant
un élément en forme d'arche semi-circulaire (2) qui, sur le côté extérieur de l'arche circulaire, comporte au moins un élément faisant saillie (3) agencé pour saisir un collier de tube, l'élément faisant saillie (3) comportant un élément formant épaulement (4).

2. Pièce rapportée selon la revendication 1, **caractérisée en ce que** le nombre de saillies (3) est de deux.

3. Pièce rapportée selon la revendication 1, **caractérisée en ce que** le nombre de saillies (3) est de quatre.

4. Pièce rapportée selon la revendication 1, **caractérisée en ce qu'**une saillie (3) est agencée centralement sur le côté extérieur de l'élément en arche circulaire (2), de sorte que la saillie (3) est agencée pour saisie dans un trou agencé dans le collier de tube.

5. Pièce rapportée selon la revendication 1, **caractérisée en ce que** des saillies (3), de préférence deux, sont situées sur un des bords latéraux de l'élément (2), et **en ce qu'**un doigt (5) s'étend à partir d'une telle saillie (3), lequel doigt (5) est agencé pour saisie sur un bord latéral d'un collier de tube et son côté arrière.

6. Pièce rapportée selon l'une quelconque des revendications 1 à 5, **caractérisée en ce que** l'élément (2) est fabriqué en une matière plastique rigide.

7. Pièce rapportée selon l'une quelconque des revendications 1 à 5, **caractérisée en ce que** l'élément (2) est fabriqué en une matière plastique flexible.

8. Pièce rapportée selon la revendication 7, **caractérisée en ce que** l'élément flexible (2) a été cannelé pour améliorer une adaptation de forme.
